# EUROPEAN PATENT APPLICATION

(11) **EP 4 579 616 A1**
(43) Date of publication of application: **02.07.2025**
(21) Application number: 24223393.0
(22) Date of filing: 27.12.2024
(51) Int. Cl.: G06V 20/56

(54) **METHOD FOR OBTAINING ENVIRONMENT PERCEPTION INFORMATION, READABLE STORAGE MEDIUM, AND SMART DEVICE**

(30) Priority: 28.12.2023 CN 202311823966
(71) Applicant: Anhui NIO Autonomous Driving Technology Co., Ltd., Hefei, Anhui 230601 (CN)
(72) Inventor: REN, Shaoqing, AnTing Town, Jiading Shanghai (CN); XIONG, Qi, AnTing Town, Jiading Shanghai (CN); PENG, Chao, AnTing Town, Jiading Shanghai (CN)
(74) Representative: Vossius & Partner Patentanwälte Rechtsanwälte mbB

(57) **Abstract**

The invention relates to the field of autonomous driving technologies, and specifically provides a method for obtaining environment perception information, a readable storage medium, and a smart device, which are intended to effectively solve the problems that existing environment perception systems are difficult to maintain, present a low upper limit of algorithmic performance, and are incapable of using massive data. In the invention, consecutive multi-frame perceptual object information is obtained based on data collected by onboard sensors, association matching and state prediction are performed on perceptual prediction objects in the consecutive multi-frame perceptual object information by using a machine learning algorithm, and an environment perception result of an environment in which a vehicle is located is obtained based on an obtained first association matching result and an obtained first state prediction result. The machine learning algorithm can implement iterative updates of the algorithm based on a data driven method, and allow for continuous improvement in algorithm performance by effectively utilizing massive data, so as to better support the application in complex scenarios, thereby effectively reducing difficulties and costs of maintenance.

## Description

The present application claims priority of CN patent application 202311823966.0 filed on December 28, 2023 with the title "Method for obtaining environment perception information, readable storage medium, and smart device", the entire of which is incorporated herein by reference.

### TECHNICAL FIELD

The invention relates to the field of autonomous driving technologies, and particularly provides a method for obtaining environment perception information, a readable storage medium, and a smart device.

### BACKGROUND ART

An autonomous driving perception system mainly provides environment perception information such as dynamic perception information (obstacles) and static perception information (lane lines), providing a basis for downstream planning and control of module systems and vehicle driving. The existing mainstream environment perception systems mainly include object detection modules based on neural network models, rule-based multi-source fusion modules, etc. The multi-source fusion modules mainly include association matching systems, state estimation systems, and reporting systems. Most of the multi-source fusion modules in the industry use the conventional numerical computation theory, in which the object association systems mainly use a Hungarian matching algorithm or related variants thereof, the state estimation systems typically use Kalman filtering or LM optimization (Levenberg-Marquardt method), etc., and the reporting systems typically use policies to perform life cycle management on objects or report and transfer object state information to downstream models for use.

However, during practical application, this solution has the problems of including a greater number of parameters, being difficult to maintain, presenting a low upper limit of algorithm performance, being incapable of automating the use of massive data, failing to support complex scenarios in urban areas, etc.

Accordingly, there is a need in the art for a new environment perception obtaining solution to resolve the above problems.

### SUMMARY

In order to overcome the above defects, the invention is provided to solve or at least in part effectively solve the problems that existing environment perception systems are difficult to maintain, present a low upper limit of algorithmic performance, and are incapable of using massive data.

According to a first aspect, the invention provides a method for obtaining environment perception information. The method includes:
obtaining, based on data collected by onboard sensors of a vehicle, consecutive multi-frame perceptual object information of an environment in which the vehicle is located, where the consecutive multi-frame perceptual object information includes perceptual object information at a current moment; and each frame of the perceptual object information includes a plurality of perceptual prediction objects;
performing association matching between the perceptual prediction objects and state prediction of the perceptual prediction objects based on the consecutive multi-frame perceptual object information by using a machine learning algorithm, to obtain a first association matching result and a first state prediction result of the perceptual prediction objects at the current moment; and
obtaining, based on the first association matching result and the first state prediction result, an environment perception result of the environment in which the vehicle is located.

In one technical solution of the above method for obtaining environment perception information, the obtaining a first association matching result and a first state prediction result of the perceptual prediction objects at the current moment includes:
obtaining a first association matching result between the perceptual prediction objects in the perceptual object information at the current moment and the perceptual prediction objects in the consecutive multi-frame perceptual object information based on the consecutive multi-frame perceptual object information by using the machine learning algorithm; and
obtaining the first state prediction result of the perceptual prediction objects at the current moment based on the first association matching result.

In one technical solution of the above method for obtaining environment perception information, the obtaining a first association matching result between the perceptual prediction objects in the perceptual object information at the current moment and the perceptual prediction objects in the consecutive multi-frame perceptual object information includes:
performing feature encoding on the perceptual prediction objects included in the consecutive multi-frame perceptual object information by using the machine learning algorithm, to obtain feature encoding results of all the perceptual prediction objects;
obtaining feature encoding results of the perceptual prediction objects at the current moment from the feature encoding results of all the perceptual object information; and
performing feature interaction on the feature encoding results of all the perceptual prediction objects and the feature encoding results of the perceptual prediction objects at the current moment, to obtain the first association matching result between the perceptual prediction objects in the perceptual object information at the current moment and the perceptual prediction objects in the consecutive multi-frame perceptual object information.

In one technical solution of the above method for obtaining environment perception information, the obtaining the first state prediction result of the perceptual prediction objects at the current moment based on the first association matching result includes:
performing feature decoding based on the first association matching result, the feature encoding results of all the perceptual prediction objects, and the feature encoding results of the perceptual prediction objects at the current moment, to obtain the first state prediction result of the perceptual prediction objects at the current moment.

In one technical solution of the above method for obtaining environment perception information, the method further includes:
performing association matching between the perceptual prediction objects and state prediction of the perceptual prediction objects based on the consecutive multi-frame perceptual object information by using a rule-based fusion algorithm, to obtain a second association matching result and a second state prediction result of the perceptual prediction objects at the current moment; and
the obtaining, based on the first association matching result and the first state prediction result, an environment perception result of the environment in which the vehicle is located includes:
   obtaining the environment perception result based on the first association matching result, the first state prediction result, the second association matching result, and the second state prediction result.

In one technical solution of the above method for obtaining environment perception information, the obtaining the environment perception result based on the first association matching result, the first state prediction result, the second association matching result, and the second state prediction result includes:
making a selection from the first association matching result and the second association matching result through a first switch control instruction, to obtain an association matching selection result, where the association matching selection result is one of the first association matching result, the second association matching result, and a combination of the first association matching result and the second association matching result;
making a selection from the first state prediction result and the second state prediction result through a second switch control instruction, to obtain a state prediction selection result, where the state prediction selection result is one of the first state prediction result, the second state prediction result, and a combination of the first state prediction result and the second state prediction result; and
obtaining the environment perception result based on the association matching selection result and the state prediction selection result.

In one technical solution of the above method for obtaining environment perception information, the obtaining the environment perception result includes:
obtaining an object confidence of the perceptual prediction objects at the current moment based on a function type of an autonomous driving function of the vehicle; and
obtaining the environment perception result based on the object confidence.

In one technical solution of the above method for obtaining environment perception information, the obtaining an object confidence of the perceptual prediction objects at the current moment includes:
obtaining the object confidence based on the function type by using a preset object confidence prediction model.

In one technical solution of the above method for obtaining environment perception information, the onboard sensors include at least one onboard camera; and
the obtaining, based on data collected by onboard sensors of a vehicle, consecutive multi-frame perceptual object information of an environment in which the vehicle is located includes:
obtaining, based on image data collected by the onboard camera, the consecutive multi-frame perceptual object information of the environment in which the vehicle is located.

In one technical solution of the above method for obtaining environment perception information, the onboard sensors include at least one onboard lidar; and
the obtaining, based on data collected by the onboard camera, the consecutive multi-frame perceptual object information of the environment in which the vehicle is located includes:
obtaining, based on the image data collected by the onboard camera and point cloud data collected by the onboard lidar, the consecutive multi-frame perceptual object information of the environment in which the vehicle is located.

In one technical solution of the above method for obtaining environment perception information, the onboard sensors include at least one millimeter-wave radar; and
the obtaining, based on the image data collected by the onboard camera and point cloud data collected by the onboard lidar, the consecutive multi-frame perceptual object information of the environment in which the vehicle is located includes:
obtaining, based on the image data collected by the onboard camera, the point cloud data collected by the onboard lidar, and output data from the millimeter-wave radar, the consecutive multi-frame perceptual object information of the environment in which the vehicle is located.

In one technical solution of the above method for obtaining environment perception information, the onboard sensors include at least one millimeter-wave radar; and
the obtaining, based on data collected by the onboard camera, the consecutive multi-frame perceptual object information of the environment in which the vehicle is located includes:
obtaining, based on the image data collected by the onboard camera and output data from the millimeter-wave radar, the consecutive multi-frame perceptual object information of the environment in which the vehicle is located.

According to a second aspect, a computer-readable storage medium is provided. The computer-readable storage medium stores a plurality of program codes, where the program codes are adapted to be loaded and executed by at least one processor to perform the method for obtaining environment perception information as described in any one of the technical solutions for the above method for obtaining environment perception information.

According to a third aspect, a smart device is provided. The smart device includes:
at least one processor,
and a memory in communication connection with the at least one processor,
where the memory stores a computer program that, when executed by the at least one processor, implements the method for obtaining environment perception information as described in any one of the technical solutions for the above method for obtaining environment perception information.

The one or more technical solutions of the invention described above have at least one or more of the following beneficial effects.

In the technical solutions for implementing the invention, the invention allows for obtaining, based on the data collected by the onboard sensors of the vehicle, the consecutive multi-frame perceptual object information of the environment in which the vehicle is located, performing association matching and state prediction on the perceptual prediction objects in the consecutive multi-frame perceptual object information by using the machine learning algorithm, to obtain the first association matching result and the first state prediction result of the perceptual prediction objects at the current moment, and obtaining, based on the first association matching result and the first state prediction result, the environment perception result of the environment in which the vehicle is located. With the above configuration, the invention implements the association matching and state prediction between the perceptual prediction objects by using the machine learning algorithm, which machine learning algorithm can implement iterative updates of the algorithm based on a data driven method, and then allow for continuous improvement in algorithm performance by effectively utilizing massive data. Even for complex scenarios, the machine learning algorithm can allow for effective training and iterative updates based on historical data, so as to better support the application in the complex scenarios. Moreover, the need for a lot of manual parameter adjustments and adaptations during the application of a rule-based perceptual fusion method is also avoided, thereby effectively reducing difficulties and costs of maintenance.

### BRIEF DESCRIPTION OF THE DRAWINGS

The disclosed content of the invention will become more readily understood with reference to the accompanying drawings. Those skilled in the art readily understand that these accompanying drawings are merely for illustrative purposes and are not intended to limit the protection scope of the invention. In the drawings:
FIG. 1 is a schematic flowchart of main steps of a method for obtaining environment perception information according to an embodiment of the invention;
FIG. 2 is a schematic flowchart of main steps of obtaining environment perception information in the prior art;
FIG. 3 is a schematic diagram of a main network architecture in which a first association matching result and a first state prediction result are obtained by using a machine learning algorithm, according to an implementation of an embodiment of the invention;
FIG. 4 is a schematic flowchart of main steps of performing closed-loop training on an object confidence prediction model according to an implementation of an embodiment of the invention;
FIG. 5 is a schematic flowchart of main steps of a method for obtaining environment perception information according to an implementation of an embodiment of the invention;
FIG. 6 is a schematic flowchart of main steps of a method for obtaining environment perception information according to another implementation of an embodiment of the invention;
FIG. 7 is a schematic flowchart of main steps of a method for obtaining environment perception information according to a third implementation of an embodiment of the invention; and
FIG. 8 is a schematic diagram illustrating a connection relationship between an assistant and a memory according to an embodiment of the invention.

### DETAILED DESCRIPTION OF EMBODIMENTS

Some implementations of the invention are described below with reference to the accompanying drawings. Those skilled in the art should understand that these implementations are only used to explain the technical principles of the invention, and are not intended to limit the scope of protection of the invention.

In the description of the invention, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

### Definitions of terms:

An automated driving system (ADS) means that the system continuously performs all dynamic driving tasks (DDTs) within its own operational domain design (ODD). That is, a machine system is allowed to fully undertake the task of automatic vehicle maneuvering only under specified conditions of appropriate driving scenarios. Specifically, the system is activated when the vehicle meets the ODD conditions, such that the system takes over from a human driver as the driving subject of the vehicle. The dynamic driving task (DDT) refers to continuous lateral (left and right steering) and longitudinal motion control (acceleration, deceleration, and constant speed) of the vehicle, as well as detection of and response to a target and an event in a driving environment of the vehicle. The operational domain design (ODD) refers to conditions under which the automated driving system can operate safely, and the conditions set therefor can include a geographical location, a road type, a speed range, weather, time, national and local traffic laws and regulations, etc.

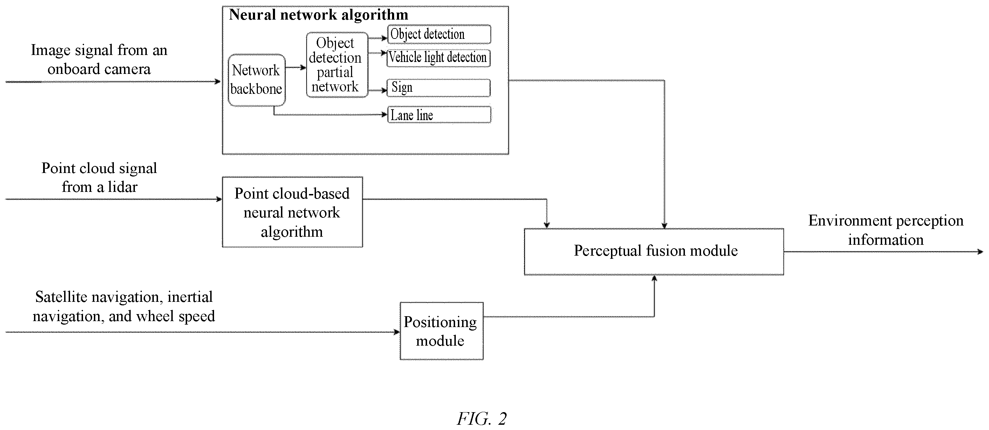

Referring to FIG. 2, FIG. 2 is a schematic flowchart of main steps of obtaining environment perception information in the prior art. As shown in FIG. 2, in the prior art, image signals from an onboard camera are generally input into a neural network for object detection, so as to obtain object detection, vehicle light detection, signs, lane lines, etc.; point cloud signals from a laser radar are input into a point cloud-based neural network to obtain an object detection result; signals such as satellite navigation, inertial navigation, and a wheel speed are input into a positioning module to obtain positioning data. Then, environment perception information is obtained by performing perceptual fusion based on the above three types of data by a perceptual fusion module. In the prior art, most of the multi-source fusion modules generally use the conventional numerical computation theory, in which object association systems mainly use a Hungarian matching algorithm or related variants thereof, state estimation systems typically use Kalman filtering or LM optimization (Levenberg-Marquardt method), etc., and reporting systems typically use policies to perform life cycle management on objects or report and transfer object state information to downstream models for use. During practical application, this solution has the problems of including a greater number of parameters, being difficult to maintain, presenting a low upper limit of algorithm performance, being incapable of automating the use of massive data, failing to support complex scenarios in urban areas, etc.

Accordingly, there is a need in the art for a new environment perception information obtaining solution to resolve the above problems.

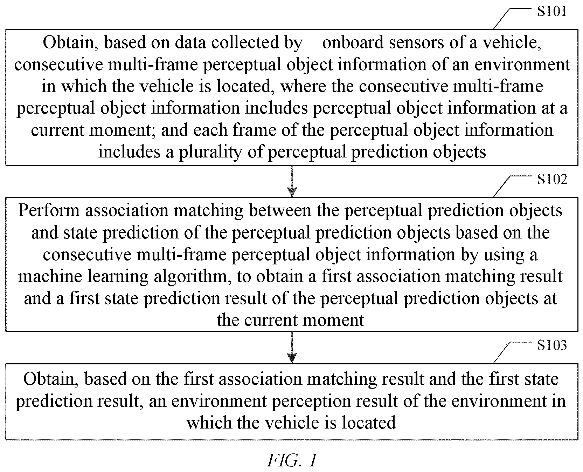

Referring to FIG. 1, FIG. 1 is a schematic flowchart of main steps of a method for obtaining environment perception information according to an embodiment of the invention. As shown in FIG. 1, the method for obtaining environment perception information in this embodiment of the invention mainly includes the following steps S101 to S 103.

Step S 101: Obtain, based on data collected by onboard sensors of a vehicle, consecutive multi-frame perceptual object information of an environment in which the vehicle is located. The consecutive multi-frame perceptual object information includes perceptual object information at a current moment. Each frame of the perceptual object information includes a plurality of perceptual prediction objects.

In this embodiment, the consecutive multi-frame perceptual object information of an environment in which the vehicle is located may be obtained based on the data collected by the onboard sensors of the vehicle.

In an implementation, the perceptual prediction objects may be obstacle objects (both dynamic and static) in the environment in which the vehicle is located.

In an implementation, the onboard sensors may be one or more of an onboard camera, an onboard lidar, and a millimeter-wave radar.

The consecutive multi-frame perceptual object information may be obtained by performing object detection based on image data collected by the onboard camera by using a neural network algorithm, where the perceptual object information may include obstacle objects, vehicle lights, signs, lane lines, etc. The consecutive multi-frame perceptual object information may be obtained based on point cloud data collected by the onboard lidar by using a neural network algorithm, where the perceptual object information may include obstacle objects, etc. The consecutive multi-frame perceptual object information may be obtained based on output data from the millimeter-wave radar.

Step S102: Perform association matching between the perceptual prediction objects and state prediction of the perceptual prediction objects based on the consecutive multi-frame perceptual object information by using a machine learning algorithm, to obtain a first association matching result and a first state prediction result of the perceptual prediction objects at the current moment.

In this embodiment, the association matching and state prediction between the perceptual prediction objects in the perceptual object information can be implemented by using the machine learning algorithm. The association matching refers to obtaining an association between current perceptual prediction objects and other perceptual prediction objects. The state prediction refers to obtaining the state of the perceptual prediction objects at a future instant.

In an implementation, a neural network model may be constructed based on the machine learning algorithm, and may be trained using historical data, such that the association matching and state prediction between the perceptual prediction objects are performed based on the trained neural network model, to obtain the first association matching result and the first state prediction result of the perceptual prediction objects at the current moment.

In an implementation, the association matching and state prediction between the perceptual prediction objects may be performed based on the consecutive multi-frame perceptual object information and positioning data on the vehicle by using the machine learning algorithm. The positioning data on the vehicle may be obtained based on satellite navigation, inertial navigation, a wheel speedometer of the vehicle, etc.

Step S103: Obtain, based on the first association matching result and the first state prediction result, an environment perception result of the environment in which the vehicle is located.

In this embodiment, the environment perception result of the environment in which the vehicle is located may be obtained based on the first association matching result and the first state prediction result. The environment perception result is used for planning and control of downstream autonomous driving, providing more comprehensive perception of the environment and prediction data.

Based on the above steps S101 to S103, this embodiment of the invention allows for obtaining, based on the data collected by the onboard sensors of the vehicle, the consecutive multi-frame perceptual object information of the environment in which the vehicle is located, performing association matching and state prediction on the perceptual prediction objects in the consecutive multi-frame perceptual object information by using the machine learning algorithm, to obtain the first association matching result and the first state prediction result of the perceptual prediction objects at the current moment, and obtaining, based on the first association matching result and the first state prediction result, the environment perception result of the environment in which the vehicle is located. With the above configuration, this embodiment of the invention implements the association matching and state prediction between the perceptual prediction objects by using the machine learning algorithm, which machine learning algorithm can implement iterative updates of the algorithm based on a data driven method, and then allow for continuous improvement in algorithm performance by effectively utilizing massive data. Even for complex scenarios, the machine learning algorithm can allow for effective training and iterative updates based on historical data, so as to better support the application in the complex scenarios. Moreover, the need for a lot of manual parameter adjustments and adaptations during the application of a rule-based perceptual fusion method is also avoided, thereby effectively reducing difficulties and costs of maintenance.

Steps S101 to S103 will be further described separately below.

In an implementation of this embodiment of the invention, step S101 may be further configured to:
obtain, based on image data collected by the onboard camera, the consecutive multi-frame perceptual object information of the environment in which the vehicle is located.

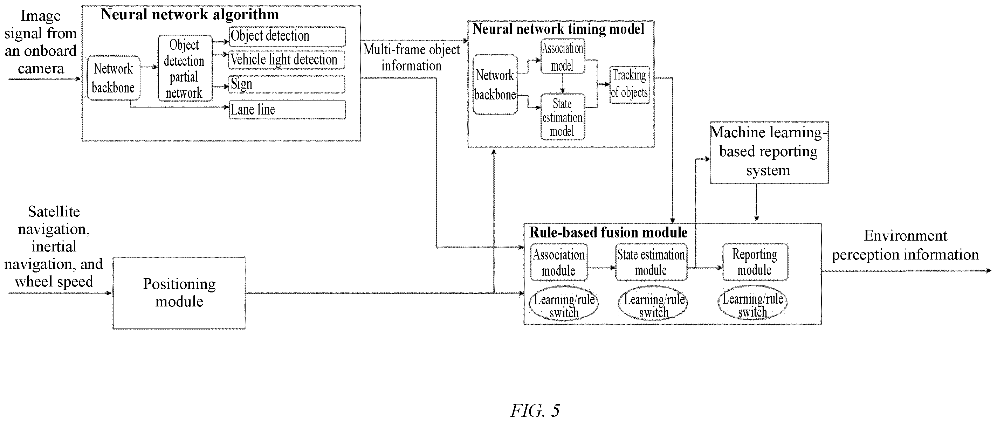

In this implementation, the perceptual object information may be obtained based on the image data collected by the onboard camera. Referring to FIG. 5, FIG. 5 is a schematic flowchart of main steps of a method for obtaining environment perception information according to an implementation of an embodiment of the invention. As shown in FIG. 5, an image signal from the onboard camera (image data collected by the onboard camera) may be input into a model constructed based on a neural network algorithm, such that object detection, vehicle light detection, and sign detection are performed by an object detection partial network. Lane line detection is performed by the network backbone, to obtain multi-frame object information (perceptual object information).

In an implementation, the image signal from the onboard camera (image data collected by the onboard camera) may be a multi-channel signal (such as 11-channel, or 7-channel), i.e., the image signal from the onboard camera may come from a plurality of onboard cameras disposed at different positions of the vehicle.

In an implementation, step S 101 may be further configured to:
obtain, based on the image data collected by the onboard camera and point cloud data collected by the onboard lidar, the consecutive multi-frame perceptual object information of the environment in which the vehicle is located.

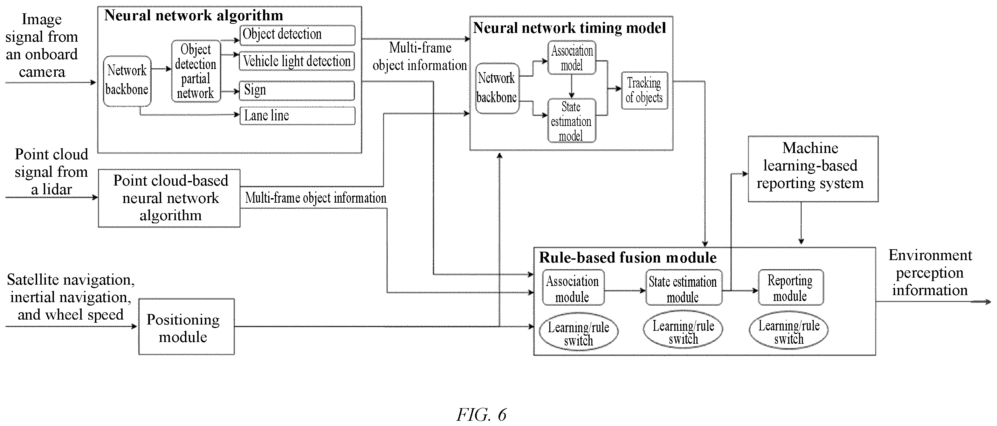

In this implementation, the perceptual object information may be obtained based on the image data collected by the onboard camera and the point cloud data collected by the onboard lidar. Referring to FIG. 6, FIG. 6 is a schematic flowchart of main steps of a method for obtaining environment perception information according to another implementation of an embodiment of the invention. As shown in FIG. 6, in addition to obtaining the multi-frame object information based on the image signal from the onboard camera as shown in FIG. 5, it is also possible to input a point cloud signal from the laser radar (point cloud data collected by the onboard lidar) into a point cloud-based neural network algorithm model to obtain the multi-frame object information (perceptual object information). The specific steps of obtaining the multi-frame object information based on the image signal from the onboard camera in FIG. 6 are the same as those in FIG. 5, and will not be repeated herein.

In an implementation, the point cloud signal from the laser radar (point cloud data collected by the onboard lidar) may be a 1-channel signal or a multi-channel signal (such as 2-channel, or 3-channel). That is, the point cloud signal from the laser radar may come from one onboard lidar, or from a plurality of onboard lidars disposed at different positions of the vehicle.

In an implementation, step S 101 may be further configured to:
obtain, based on the image data collected by the onboard camera, the point cloud data collected by the onboard lidar, and output data from the millimeter-wave radar, the consecutive multi-frame perceptual object information of the environment in which the vehicle is located.

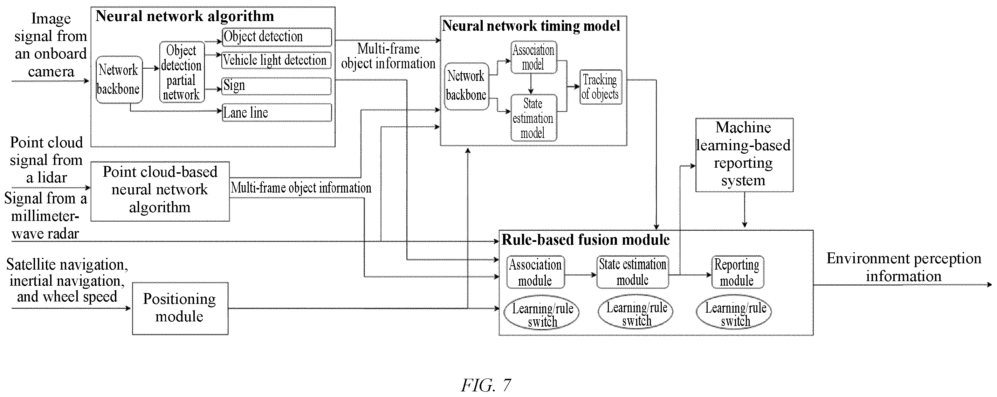

In this implementation, the perceptual object information may be obtained based on the image data collected by the onboard camera, the point cloud data collected by the onboard lidar, and the output data from the millimeter-wave radar. Referring to FIG. 7, FIG. 7 is a schematic flowchart of main steps of a method for obtaining environment perception information according to a third implementation of an embodiment of the invention. As shown in FIG. 7, in addition to obtaining the multi-frame object information based on the image signal from the onboard camera as shown in FIG. 6, it is also possible to obtain the multi-frame object information (perceptual object information) based on a signal from the millimeter-wave radar (output data from the millimeter-wave radar). The specific steps of obtaining the multi-frame object information based on the image signal from the onboard camera and the specific steps of obtaining the multi-frame object information based on the point cloud signal from the laser radar in FIG. 7 are the same as those in FIG. 6, and will not be repeated herein.

In an implementation, the millimeter-wave radar may be a 4D imaging millimeter-wave radar (generally operating at 79 GHz), or may be a conventional millimeter-wave radar.

In an implementation, step S 101 may be further configured to:
obtain, based on the image data collected by the onboard camera and output data from the millimeter-wave radar, the consecutive multi-frame perceptual object information of the environment in which the vehicle is located.

In this implementation, the perceptual object information may be obtained based on the image data collected by the onboard camera and the output data from the millimeter-wave radar.

In an implementation of this embodiment of the invention, step S 102 may further include the following steps S 1021 and S 1022.

Step S 1021: Obtain a first association matching result between the perceptual prediction objects in the perceptual object information at the current moment and the perceptual prediction objects in the consecutive multi-frame perceptual object information based on the consecutive multi-frame perceptual object information by using the machine learning algorithm.

Step S1022: Obtain the first state prediction result of the perceptual prediction objects at the current moment based on the first association matching result.

In this implementation, as shown in FIG. 6, a neural network timing model may be constructed based on the machine learning algorithm, and the multi-frame object information (perceptual object information) are input into the neural network timing model, such that an association model in the neural network timing model obtains the first association matching result between the perceptual prediction objects in the perceptual object information at the current moment and the perceptual prediction objects in the consecutive multi-frame perceptual object information. The first state prediction result is obtained by a state estimation model in the neural network timing model based on the first association matching result, thereby implementing tracking of the perceptual prediction objects at the current moment.

In an implementation, step S 1021 further includes the following steps S 10211 to S 10213.

Step S10211: Perform feature encoding on the perceptual prediction objects included in the consecutive multi-frame perceptual object information by using the machine learning algorithm, to obtain feature encoding results of all the perceptual prediction objects.

Step S10212: Obtain feature encoding results of the perceptual prediction objects at the current moment from the feature encoding results of all the perceptual object information.

Step S 10213 : Perform feature interaction on the feature encoding results of all the perceptual prediction objects and the feature encoding results of the perceptual prediction objects at the current moment, to obtain the first association matching result between the perceptual prediction objects in the perceptual object information at the current moment and the perceptual prediction objects in the consecutive multi-frame perceptual object information.

Step S 1022 is further configured to:
perform feature decoding based on the first association matching result, the feature encoding results of all the perceptual prediction objects, and the feature encoding results of the perceptual prediction objects at the current moment, to obtain the first state prediction result of the perceptual prediction objects at the current moment.

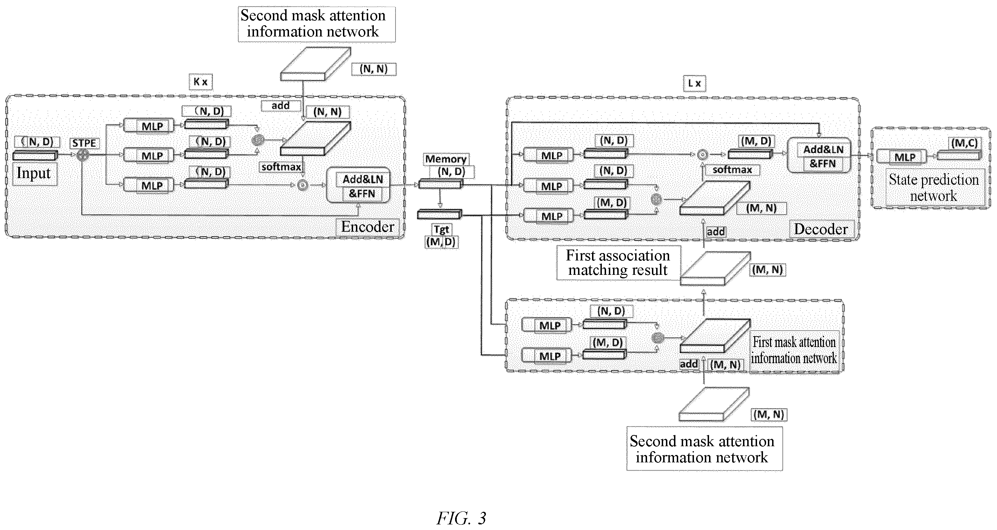

Referring to FIG. 3, FIG. 3 is a schematic diagram of a main network architecture in which a first association matching result and a first state prediction result are obtained by using a machine learning algorithm, according to an implementation of an embodiment of the invention. The perceptual object information being obtained based on the point cloud data collected by the onboard lidar is used as an example. Steps S 10211 to S 10213 and step S 1022 will be described below with reference to FIG. 3.

As shown in FIG. 3, a neural network model constructed based on the machine learning algorithm may be a Transformer architecture model. The Transformer architecture model may include K (K×) encoders, L (L×) decoders, a first mask attention information network (Asso Head), a second mask attention information network (ST Attention Mask), and a state prediction network (State Head). M represents a maximum number of objects at a moment, with a total of T consecutive frames, i.e., T moments (including the current moment + (T-1) historical moments), and N=T*M represents a maximum number of perceptual prediction objects at all moments. The perceptual prediction objects at the current moment are referred to as Query, and the perceptual prediction objects at all the moments are referred to as Key (including the current moment). D denotes a feature dimension. Memory denotes feature encoding results of Key. Tgt denotes feature encoding results of Query, which is obtained by taking the last M ones from Memory. The first mask attention information network (Asso Head) outputs an association between query and key, and the state prediction network (State Head) outputs a state prediction. MLP denotes a multilayer perceptron.

All the perceptual prediction objects are input into the encoders, are subjected to spatio-temporal positional embedding (STPE) based on the positioning data on the vehicle, pass through the multilayer perceptron (MLP), and then are subjected to feature encoding via softmax (an activation function), an Add & Layer Norm (Add&LN, residual connection and layer normalization) network, a feed forward network (FFN), etc., in combination with the second mask attention information network (ST Attention Mask), so as to obtain the feature encoding results Memory of all the perceptual prediction objects, and the last M ones are taken from Memory to be used as the feature encoding results Tgt of the perceptual prediction objects at the current moment.

The feature encoding results Memory of all the perceptual prediction objects and the feature encoding results Tgt of the perceptual prediction objects at the current moment are input into the first mask attention information network (Asso Head), pass through the multilayer perceptron (MLP), and then are subjected to residual connection (add) in combination with the second mask attention information network (ST Attention Mask), so as to obtain the first association matching result (Association Mask).

The feature encoding results Memory of all the perceptual prediction objects and the feature encoding results Tgt of the perceptual prediction objects at the current moment are input into the decoders, pass through the multilayer perceptron (MLP), are subjected to residual connection (add) with the first association matching result, and then are subjected to feature decoding via the softmax activation function, the Add&LN network, the FFN network, etc., so as to obtain feature decoding results. The feature decoding results are input into the state prediction network (State Head) to obtain the first state prediction result (Optimized State).

In an implementation of this embodiment of the invention, the invention further includes the following step S104.

Step S104: Perform association matching between the perceptual prediction objects and state prediction of the perceptual prediction objects based on the consecutive multi-frame perceptual object information by using a rule-based fusion algorithm, to obtain a second association matching result and a second state prediction result of the perceptual prediction objects at the current moment.

In this implementation, the association matching between the perceptual prediction objects and the state prediction of the perceptual prediction objects may also be performed based on the consecutive multi-frame perceptual object information by using the rule-based fusion algorithm. The rule-based fusion algorithm may be a Hungarian matching algorithm, etc.

As shown in FIG. 6, a rule-based fusion module is used to implement the rule-based fusion algorithm to perform the association matching between the perceptual prediction objects and the state prediction of the perceptual prediction objects.

Step S 103 may be further configured to:
obtain the environment perception result based on the first association matching result, the first state prediction result, the second association matching result, and the second state prediction result.

In this implementation, the environment perception result may be obtained by combining the first association matching result, the first state prediction result, the second association matching result, and the second state prediction result. On the basis of performing the association matching and state prediction of the perceptual prediction objects based on the machine learning algorithm, the rule-based fusion algorithm is further set up for the association matching and state prediction of the perceptual prediction objects. The two methods may be used alone or in combination, and they are redundant designs for each other.

In an implementation, as shown in FIG. 6, vehicle positioning may be performed through a positioning module based on information such as satellite navigation, inertial navigation, and a wheel speed, such that the positioning data on the vehicle can be obtained and then input into the neural network timing model and the rule-based fusion module, separately, to implement the association matching and state prediction of the perceptual prediction objects.

In an implementation, step S 103 may further include the following steps S1031 to S1033.

Step S103 1: Make a selection from the first association matching result and the second association matching result through a first switch control instruction, to obtain an association matching selection result. The association matching selection result is one of the first association matching result, the second association matching result, and a combination of the first association matching result and the second association matching result.

Step S1032: Make a selection from the first state prediction result and the second state prediction result through a second switch control instruction, to obtain a state prediction selection result. The state prediction selection result is one of the first state prediction result, the second state prediction result, and a combination of the first state prediction result and the second state prediction result.

Step S 1033: Obtain the environment perception result based on the association matching selection result and the state prediction selection result.

In this implementation, as shown in FIG. 6, a switch for selecting an association matching result and a switch for selecting a state prediction result are provided in the rule-based fusion module, such that the selection can be made from the first association matching result and the second association matching result based on the first switch control instruction corresponding to the switch, one or both of which results may be used. Similarly, the selection can be made from the first state prediction result and the second state prediction result based on the second switch control instruction corresponding to the switch, one or both of which results may be used. The environment perception result may be obtained by combining the selected association matching selection result and state prediction selection result.

In an implementation of this embodiment of the invention, step S103 may further include the following steps S 1031 and S 1032.

Step S 1031: Obtain an object confidence of the perceptual prediction objects at the current moment based on a function type of an autonomous driving function of the vehicle.

In this implementation, the object confidence of the perceptual prediction objects at the current moment may be obtained based on the function type of the autonomous driving function by using a preset object confidence prediction model.

Specifically, for different function types of autonomous driving functions (e.g., autonomous emergency braking (AEB), lane centering control (LCC), navigate on pilot (NOP), etc.), different perceptual prediction objects are required. Therefore, the same perceptual prediction object may have different confidences for different function types.

For example, if a perceptual prediction object (pedestrian) with id=10 has an object confidence of 0.3 under the AEB function, and an object confidence of 0.9 under the NOP function, it may be understood that this perceptual prediction object is a perceptual prediction object in some scenarios (such as a city scenario, or a suburban scenario) that do not comply with the requirements of AEB regulations, and can thus be ignored; however, under the NOP function, it is necessary to respond to this perceptual prediction object to avoid collisions. The object confidence may be a label of the perceptual prediction objects.

In an implementation, the object confidence prediction model may be a model that is set based on a random forest algorithm.

In an implementation, closed-loop training may be performed on the object confidence prediction model by using production-associated data of the vehicle, to obtain a trained object confidence prediction model.

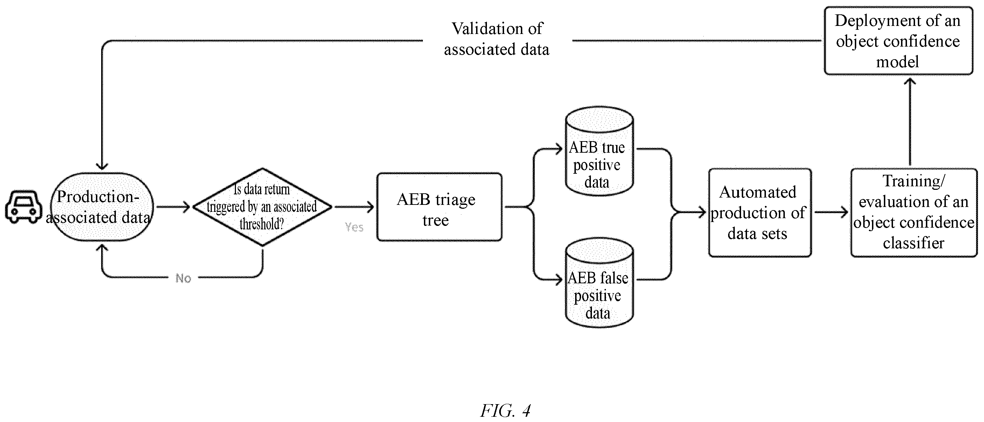

Referring to FIG. 4, FIG. 4 is a schematic flowchart of main steps of performing closed-loop training on an object confidence prediction model according to an implementation of an embodiment of the invention. As shown in FIG. 4, the process of performing closed-loop training on the object confidence prediction model is illustrated by using an object confidence under an AEB function as an example. Production-associated data is generated during operation of a vehicle, whereby it may be determined whether data return is triggered by an associated threshold. If the data return is not triggered by the associated threshold, the process returns back to the production-associated step. If the data return is triggered by the associated threshold, an AEB triage tree (root cause triage tree) is constructed. The AEB triage tree performs root cause analysis and positive and negative sample annotations on the returned data, i.e., the returned data is divided into AEB true positive (TP) data and AEB false positive (FP) data, and the automated production of data sets is implemented based on the AEB true positive data and the AEB false positive data. The training/evaluation of an object confidence classifier is performed based on the data sets. After completion of the training/evaluation, the object confidence prediction model is deployed and then validated based on the associated data. Thus, a closed-loop process is implemented. Association refers to the process of data return and performance testing of the vehicle during actual operation of the vehicle on a road. The production-associated data refers to data that is returned by the vehicle during its actual operation on a road.

In an implementation, as shown in FIG. 6, the object confidence of the perceptual prediction objects may be obtained from a machine learning-based reporting system of FIG. 6.

Step S1032: Obtain the environment perception result based on the object confidence.

In this implementation, after the object confidence of the perceptual prediction objects is obtained, the environment perception result may be generated based on the object confidence.

In an implementation, as shown in FIG. 6, the environment perception information (environment perception result) may be obtained by a reporting module of FIG. 6 and then output.

For example, the environment perception result may be generated based on the first association matching result, the first state prediction result, and the object confidence of the perceptual prediction objects, to implement tracking of the perceptual prediction objects.

For another example, the environment perception result is generated based on the first association matching result, the first state prediction result, the second association matching result, the second state prediction result, and the object confidence of the perceptual prediction objects, to implement tracking of the perceptual prediction objects.

It should be noted that the positioning module, the neural network timing model, the rule-based fusion module, the machine learning-based reporting system, the steps of obtaining the environment perception information, etc. in the method for obtaining environment perception information of FIG. 5 and FIG. 7 are the same as those in FIG. 6, and will not be repeated herein for ease of description.

It should be noted that, although the steps are described in a particular sequence in the above embodiments, a person skilled in the art may understand that, to implement the effects of the invention, different steps are not necessarily performed in such a sequence, and the steps may be performed simultaneously (in parallel) or in another sequence. These changes fall within the protection scope of the invention.

Those skilled in the art may understand that all or some of the procedures in the methods in the above embodiments of the invention may be implemented by using a computer program instructing related hardware. The computer program may be stored in a computer-readable storage medium. When the computer program is executed by a processor, the steps in the above method embodiments may be implemented. The computer program includes computer program code, and the computer program code may be in a source code form, an object code form, a form of an executable file, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, a software distribution medium, and the like. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the invention also provides a computer-readable storage medium. In an embodiment of the computer-readable storage medium according to the invention, the computer-readable storage medium may be configured to store a program for performing the method for obtaining environment perception information in the above method embodiments, and the program may be loaded and executed by at least one processor to implement the above method for obtaining environment perception information. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

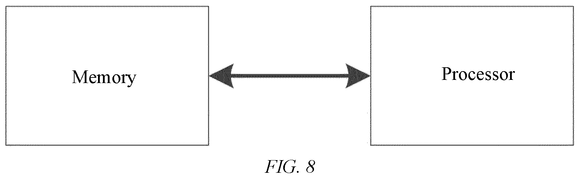

Further, the invention also provides a smart device. The smart device may include: at least one processor; and a memory in communication connection with the at least one processor, where the memory stores a computer program that, when executed by the at least one processor, implements the method described in any one of the foregoing embodiments. The smart device of the invention may include a driving device, a smart car, a robot, etc. Referring to FIG. 8, FIG. 8 is a schematic diagram illustrating a connection relationship between an assistant and a memory according to an embodiment of the invention. As shown in FIG. 8, a communication connection between the memory and the processor through a bus is exemplarily shown in FIG. 8.

In some embodiments of the invention, the smart device further includes at least one sensor for sensing information. The sensor is in communication connection with any type of processor mentioned in the invention. Optionally, the smart device further includes an automated driving system configured to guide the smart device to drive autonomously or assist in driving. The processor communicates with the sensor and/or the automated driving system to implement the method described in any one of the foregoing embodiments.

Further, it should be understood that, because the configuration of modules is merely intended to illustrate functional units of the apparatus of the invention, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or combined. Such a split or combination of specific modules does not cause the technical solutions to depart from the principle of the invention. Therefore, technical solutions after any such split or combination shall all fall within the scope of protection of the invention.

The related user personal information that may be involved in the embodiments of the invention is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user personal information processed in the invention varies depending on the specific product/service scenario, and shall be subject to the specific scenario in which the user uses the product/service. It may involve account information, device information, driving information, vehicle information, or other related information of the user. The user's personal information and processing thereof shall be treated in the invention with a high degree of diligence.

The invention attaches great importance to the security of the user personal information, and reasonable and feasible security protection measures that comply with industry standards have been taken to protect information of the user and prevent the personal information from unauthorized access, public disclosure, use, modification, damage or loss.

Heretofore, the technical solutions of the invention have been described in combination with the preferred implementations shown in accompanying drawings. However, those skilled in the art can readily understand that the scope of protection of the invention is apparently not limited to these particular implementations. Those skilled in the art can make equivalent changes or substitutions to the related technical features without departing from the principle of the invention, and all the technical solutions with such changes or substitutions shall fall within the scope of protection of the invention.

## Claims

1. A method for obtaining environment perception information, comprising:
obtaining, based on data collected by onboard sensors of a vehicle, consecutive multi-frame perceptual object information of an environment in which the vehicle is located, wherein the consecutive multi-frame perceptual object information comprises perceptual object information at a current moment; and each frame of the perceptual object information comprises a plurality of perceptual prediction objects;
performing association matching between the perceptual prediction objects and state prediction of the perceptual prediction objects based on the consecutive multi-frame perceptual object information by using a machine learning algorithm, to obtain a first association matching result and a first state prediction result of the perceptual prediction objects at the current moment; and
obtaining, based on the first association matching result and the first state prediction result, an environment perception result of the environment in which the vehicle is located.

2. The method for obtaining environment perception information according to claim 1, wherein
the obtaining a first association matching result and a first state prediction result of the perceptual prediction objects at the current moment comprises:
obtaining a first association matching result between the perceptual prediction objects in the perceptual object information at the current moment and the perceptual prediction objects in the consecutive multi-frame perceptual object information based on the consecutive multi-frame perceptual object information by using the machine learning algorithm; and
obtaining the first state prediction result of the perceptual prediction objects at the current moment based on the first association matching result.

3. The method for obtaining environment perception information according to claim 2, wherein
the obtaining a first association matching result between the perceptual prediction objects in the perceptual object information at the current moment and the perceptual prediction objects in the consecutive multi-frame perceptual object information comprises:
performing feature encoding on the perceptual prediction objects comprised in the consecutive multi-frame perceptual object information by using the machine learning algorithm, to obtain feature encoding results of all the perceptual prediction objects;
obtaining feature encoding results of the perceptual prediction objects at the current moment from the feature encoding results of all the perceptual object information; and
performing feature interaction on the feature encoding results of all the perceptual prediction objects and the feature encoding results of the perceptual prediction objects at the current moment, to obtain the first association matching result between the perceptual prediction objects in the perceptual object information at the current moment and the perceptual prediction objects in the consecutive multi-frame perceptual object information.

4. The method for obtaining environment perception information according to claim 3, wherein
the obtaining the first state prediction result of the perceptual prediction objects at the current moment based on the first association matching result comprises:
performing feature decoding based on the first association matching result, the feature encoding results of all the perceptual prediction objects, and the feature encoding results of the perceptual prediction objects at the current moment, to obtain the first state prediction result of the perceptual prediction objects at the current moment.

5. The method for obtaining environment perception information according to any one of claims 1 to 4, wherein the method further comprises:
performing association matching between the perceptual prediction objects and state prediction of the perceptual prediction objects based on the consecutive multi-frame perceptual object information by using a rule-based fusion algorithm, to obtain a second association matching result and a second state prediction result of the perceptual prediction objects at the current moment; and
the obtaining, based on the first association matching result and the first state prediction result, an environment perception result of the environment in which the vehicle is located comprises:
obtaining the environment perception result based on the first association matching result, the first state prediction result, the second association matching result, and the second state prediction result.

6. The method for obtaining environment perception information according to claim 5, wherein
the obtaining the environment perception result based on the first association matching result, the first state prediction result, the second association matching result, and the second state prediction result comprises:
making a selection from the first association matching result and the second association matching result through a first switch control instruction, to obtain an association matching selection result, wherein the association matching selection result is one of the first association matching result, the second association matching result, and a combination of the first association matching result and the second association matching result;
making a selection from the first state prediction result and the second state prediction result through a second switch control instruction, to obtain a state prediction selection result, wherein the state prediction selection result is one of the first state prediction result, the second state prediction result, and a combination of the first state prediction result and the second state prediction result; and
obtaining the environment perception result based on the association matching selection result and the state prediction selection result.

7. The method for obtaining environment perception information according to any one of claims 1 to 6, wherein
the obtaining the environment perception result comprises:
obtaining an object confidence of the perceptual prediction objects at the current moment based on a function type of an autonomous driving function of the vehicle; and
obtaining the environment perception result based on the object confidence.

8. The method for obtaining environment perception information according to claim 7, wherein
the obtaining an object confidence of the perceptual prediction objects at the current moment comprises:
obtaining the object confidence based on the function type by using a preset object confidence prediction model.

9. The method for obtaining environment perception information according to any one of claims 1 to 6, and 8, wherein the onboard sensors comprise at least one onboard camera; and
the obtaining, based on data collected by onboard sensors of a vehicle, consecutive multi-frame perceptual object information of an environment in which the vehicle is located comprises:
obtaining, based on image data collected by the onboard camera, the consecutive multi-frame perceptual object information of the environment in which the vehicle is located.

10. The method for obtaining environment perception information according to claim 9, wherein the onboard sensors comprise at least one onboard lidar; and
the obtaining, based on data collected by the onboard camera, the consecutive multi-frame perceptual object information of the environment in which the vehicle is located comprises:
obtaining, based on the image data collected by the onboard camera and point cloud data collected by the onboard lidar, the consecutive multi-frame perceptual object information of the environment in which the vehicle is located.

11. The method for obtaining environment perception information according to claim 10, wherein the onboard sensors comprise at least one millimeter-wave radar; and
the obtaining, based on the image data collected by the onboard camera and point cloud data collected by the onboard lidar, the consecutive multi-frame perceptual object information of the environment in which the vehicle is located comprises:
obtaining, based on the image data collected by the onboard camera, the point cloud data collected by the onboard lidar, and output data from the millimeter-wave radar, the consecutive multi-frame perceptual object information of the environment in which the vehicle is located.

12. The method for obtaining environment perception information according to any one of claims 9 to 11, wherein the onboard sensors comprise at least one millimeter-wave radar; and
the obtaining, based on data collected by the onboard camera, the consecutive multi-frame perceptual object information of the environment in which the vehicle is located comprises:
obtaining, based on the image data collected by the onboard camera and output data from the millimeter-wave radar, the consecutive multi-frame perceptual object information of the environment in which the vehicle is located.

13. A non-transitory computer-readable storage medium storing a plurality of program codes, wherein the program codes are adapted to be loaded and executed by at least one processor to perform the method for obtaining environment perception information according to any one of claims 1 to 12.

14. A smart device, comprising:
at least one processor,
and a memory in communication connection with the at least one processor,
wherein the memory stores a computer program that, when executed by the at least one processor, implements the method for obtaining environment perception information according to any one of claims 1 to 12.
